# EUROPÄISCHE PATENTANMELDUNG

(11) **EP 1 271 682 A2**
(43) Veröffentlichungstag der Anmeldung: **02.01.2003**
(21) Anmeldenummer: 02013965.5
(22) Anmeldetag: 25.06.2002
(51) Int. Cl.: H01M 8/10

(54) **PEM-Brennstoffzelle**

(30) Priorität: 27.06.2001 DE 10130828
(71) Anmelder: BASF Aktiengesellschaft, 67063 Ludwigshafen (DE)
(72) Erfinder: Wessel, Helge, Dr., 68167 Mannheim (DE); Bender, Michael, Dr., 67063 Ludwigshafen (DE); Harth, Klaus, Dr., 67317 Altleiningen (DE); Fischer, Andreas, Dr., 67067 Ludwigshafen (DE); Hölzle, Markus, Dr., 67281 Kirchheim (DE)
(74) Vertreter: Isenbruck, Günter, Dr.

(57) **Zusammenfassung**

Die Erfindung bezieht sich auf eine Brennstoffzelle (1) mit zwei Elektroden (2) und einer Ionenaustauschermembran (6), wobei die Elektroden (2) mit jeweils einer elektrokatalytischen Schicht (4) und mit jeweils mindestens einer Gasführung für ein Reaktionsgas (7) versehen sind. Sie weist dabei mindestens ein Additiv auf, das die Bildung von Peroxiden verhindert und/oder Peroxide zersetzt. Ferner betrifft die Erfindung die Verwendung von mindestens einem Additiv in oder an Elektroden (2) einer Brennstoffzelle (1) mit einer Ionenaustauschermembran (6), wobei die Elektroden (2) mit jeweils einer elektrokatalytischen Schicht (4) und mit jeweils mindestens einer Gasführung für ein Reaktionsgas (7) versehen sind. Das mindestens eine Additiv dient dabei zur Verhinderung der Bildung und/oder zur Zersetzung von Peroxiden an oder in den Elektroden (2).

## Beschreibung

Die vorliegende Erfindung betrifft eine Brennstoffzelle, insbesondere eine Polymerelektrolyt-Membran-Brennstoffzelle mit katalytisch wirksamen Elektroden.

Brennstoffzellen sind Energiewandler, die chemische Energie in elektrische Energie umwandeln. In einer Brennstoffzelle wird das Prinzip der Elektrolyse umgekehrt. Man kennt heute verschiedene Arten von Brennstoffzellen, die sich im allgemeinen in der Betriebstemperatur voneinander unterscheiden. Der Aufbau der Zellen ist aber prinzipiell bei allen Typen gleich. Sie bestehen im allgemeinen aus zwei Elektroden, einer Anode und einer Kathode, an der die Reaktionen ablaufen, und einem Elektrolyten zwischen den beiden Elektroden. Dieser hat drei Funktionen. Er stellt den ionischen Kontakt her, verhindert den elektrischen Kontakt und sorgt außerdem für das Getrennthalten der den Elektroden zugeführten Gase. Die Elektroden werden in der Regel mit Gasen versorgt, die im Rahmen einer Redoxreaktion umgesetzt werden. Beispielsweise werden die Anode mit Wasserstoff und die Kathode mit Sauerstoff versorgt. Um dies zu gewährleisten, sind die Elektroden mit elektrisch leitenden Gasverteilereinrichtungen kontaktiert. Dies sind insbesondere Platten mit einer gitterartigen Oberflächenstruktur, bestehend aus einem System feiner Kanäle. Die Gesamtreaktion lässt sich in allen Brennstoffzellen in einen anodischen und kathodischen Teilschritt zerlegen. Hinsichtlich der Betriebstemperatur, dem eingesetzten Elektrolyten und den möglichen Brenngasen gibt es Unterschiede zwischen den verschiedenen Zellentypen.

Grundsätzlich unterscheidet man zwischen Niedertemperatur-Brennstoffzellen und Hochtemperatursystemen. Die Niedertemperatur-Brennstoffzellen zeichnen sich im allgemeinen durch eine sehr hohe Leistungsdichte aus. Allerdings ist ihre Abwärme wegen des geringen Temperaturniveaus nur schlecht zu nutzen. Insofern sind diese Brennstoffzellen nicht für nachgeschaltete Energiewandlungsprozesse nutzbar, sie sind hingegen für den mobilen Einsatz durch eine dezentrale Anwendung kleiner Leistungen sinnvoll. Bei den Hochtemperatursystemen können z.B. Kraftwerkstufen nachgeschaltet werden, um aus der Abwärme elektrische Energie zu gewinnen oder sie als Prozesswärme zu nutzen.

Insbesondere die Polymerelektrolytbrennstoffzelle und die phosphorsaure Brennstoffzelle finden sowohl für die stationäre Anwendung als auch für mobile Einsatzzwecke derzeit großes Interesse und stehen vor einer breiten Kommerzialisierung.

Nach dem heutigen Stand der Technik weisen alle Brennstoffzellen gasdurchlässige, poröse, sogenannte dreidimensionale Elektroden, auf. Diese werden unter dem Sammelbegriff Gasdiffusionselektroden (GDE) geführt. Durch diese Elektroden hindurch werden die jeweiligen Reaktionsgase bis nahe an den Elektrolyten geführt. Der bei allen Brennstoffzellen vorhandene Elektrolyt stellt den ionischen Stromtransport in der Brennstoffzelle sicher. Er hat zudem die Aufgabe, eine gasdichte Barriere zwischen den beiden Elektroden zu bilden. Darüber hinaus garantiert und unterstützt der Elektrolyt eine stabile 3-Phasen-Schicht, in welcher die elektrolytische Reaktion stattfinden kann. Die Polymerelektrolytbrennstoffzelle setzt organische Ionenaustauschermembranen, in den technisch realisierten Fällen insbesondere perfluorierte Kationenaustauschermembranen, als Elektrolyte ein.

Gemäß dem Konzept heutiger Brennstoffzellen werden die Reaktionsgase über ein Gasverteilersystem von der Rückseite der Elektrode, d.h. der jeweils von der Gegenelektrode abgewandten Seite, der elektrochemisch aktiven Zone zugeführt. Unter Last erfolgen sowohl der Gastransport als auch die Ionenmigration senkrecht zur vorgegebenen Elektrodengeometrie.

Als problematisch unter Betriebsbedingungen hat sich die kathodische Reduktion des Sauerstoffs erwiesen: Am kathodischen Elektrodenmaterial der Brennstoffzelle, wie es im Stand der Technik beschrieben wird, werden hochreaktive peroxidische Sauerstoffspezies (zum Beispiel HO•, HOO•) gebildet, die zur protonendurchlässigen Membran diffundieren und diese irreversibel schädigen. Entsprechende Degradationsprozesse werden zum Beispiel in *EPR investigation of HO*• *radical initiated degradation reactions of sulfonated aromatics as model compounds for fuel cell proton conducting membranes, G. Hübner, E. Roduner, J. Mater. Chem., 1999, 9, S. 409-418* beschrieben.

Aufgrund dieser Degradationsprozesse ist derzeit der Einsatz perfluorierter Kationenaustauschermaterialien als Elektrolyt notwendig. Diese Materialien zeichnen sich zwar durch eine gewisse Resistenz gegenüber peroxidischen Spezies aus, haben aber die Nachteile der hohen Kosten, der aufwendigen Herstellung durch Handhabung von Fluor oder anderen Fluorierungsmitteln und sind ökologisch bedenklich, da eine Aufarbeitung und/oder Rezyklierung nicht möglich sind.

Aufgabe der vorliegenden Erfindung ist es, eine Brennstoffzelle bereitzustellen, bei der die dem beschriebenen Arbeitsprinzip heutiger Brennstoffzellen innewohnenden Nachteile vermieden werden.

Diese Aufgabe wird erfindungsgemäß durch eine Brennstoffzelle mit zwei Elektroden und einer Ionenaustauschermembran gelöst, wobei die Elektroden mit jeweils einer elektrokatalytischen Schicht und mit jeweils mindestens einer Gasführung für ein Reaktionsgas versehen sind und die jeweilige elektrokatalytische Schicht enthält dabei mindestens einen Standardkatalysator. Die Brennstoffzelle ist dadurch gekennzeichnet, dass sie mindestens ein Additiv aufweist, das die Bildung von Peroxiden unter Brennstoffzellenbedingungen verhindert und/oder Peroxide zersetzt. Insbesondere weisen die Elektroden mit den elektrokatalytischen Schichten mindestens ein Additiv auf.

Unter einem Standardkatalysator ist in diesem Zusammenhang ein Katalysator zu verstehen, der im Stande der Technik in den elektrokatalytischen Schichten von Brennstoffzellen enthalten ist und zur Herabsetzung der Aktivierungsenergie für die Brennstoffzellenreaktion benötigt wird. Es werden beispielsweise Edelmetalle als Standardkatalysatoren eingesetzt, insbesondere Platin.

Es wurde gefunden, dass durch gezielt am bzw. im Elektrodenmaterial eingebrachte Additive, die deperoxidationsaktive Eigenschaften aufweisen, die Lebens- bzw. Betriebsdauer und Wirtschaftlichkeit von Brennstoffzellen nachhaltig erhöht werden. Unter deperoxidationsaktiv ist dabei die Eigenschaft zu verstehen, dass die Bildung von Peroxiden verhindert wird und bereits gebildete Peroxide nachträglich zersetzt werden. Peroxide sind in diesem Zusammenhang alle Verbindungen von dem Typ R-O-O-R und die dazugehörigen Radikale (RO• oder ROO•), wobei R bevorzugt für H steht. Beispielsweise ist HOO• ein peroxidisches Radikal zu H₂O₂ (Wasserstoffperoxid). Durch Anbringung geeigneter deperoxidationsaktiver Verbindungen und/oder Elemente in oder an den Brennstoffzellenelektroden erfolgt überraschenderweise unter Brennstoffzellenbedingungen ein rascher Abbau bzw. eine Unterdrückung der Bildung der Peroxide. Eine irreversible Schädigung der Ionenaustauschermembran durch reaktive Peroxide wird nicht mehr beobachtet. Dies ist überraschend, da gemäß dem Prinzip der Mikroreversibilität Stoffe, die Peroxide zersetzen, auch Peroxide bilden können. Beispielsweise fungiert Platin unter Brennstoffzellenbedingungen als Peroxidbildner aufgrund der permanenten Zufuhr von O₂. Unter anderen Bedingungen wird es zur Peroxidzersetzung eingesetzt. Erst durch Einbringen weiterer deperoxidationsaktiver Additive gelingt es, die in der Brennstoffzelle am Platin gebildeten Peroxide zu zersetzen bzw. ihre Bildung zu unterdrücken.

Ferner betrifft die vorliegende Erfindung die Verwendung von mindestens einem Additiv in oder an Elektroden einer Brennstoffzelle mit einer Ionenaustauschermembran, wobei die Elektroden mit jeweils einer elektrokatalytischen Schicht und mit jeweils mindestens einer Gasführung für ein Reaktionsgas versehen sind. Dabei dient das mindestens eine Additiv zur Verhinderung der Bildung oder zur Zersetzung von Peroxiden an oder in den Elektroden.

Durch die vorliegende Erfindung werden die Wirtschaftlichkeit, der Wirkungsgrad und Lebensdauer der erfindungsgemäßen Brennstoffzellen gegenüber den bisher bekannten Brennstoffzellen erheblich verbessert. Ferner werden durch die Vermeidung des Auftretens von aggressiven Peroxiden die chemischen Stabilitätsanforderungen an die Kationenaustauschermembranen reduziert und die Verwendung ökologisch unbedenklicher, kostengünstiger herkömmlicher Materialien ermöglicht.

Im Stand der Technik sind zahlreiche Beispiele für deperoxidationsaktive Elemente und Verbindungen beschrieben, die sich als Additive bei der vorliegenden Erfindung eignen. Als Aktivkomponenten für solche Elemente und Verbindungen werden hauptsächlich die Metalle Co, Fe, Cr, Mn, Cu, V, Ru, Pd, Ni, Mo, und W genannt. Die genannten Metalle werden sowohl als homogene Katalysatoren, in Form von Salzen, Oxiden oder metallorganischen Komplexen, als auch in heterogenisierter Form in Verbindung mit verschiedenen Trägersubstanzen (z.B. C, SiO₂, Al₂O₃, Zeolithe, Heteropolysäuren) eingesetzt.

Folgende Veröffentlichungen geben auszugsweise einen Überblick diesen Stand der Technik:
Die US 3,053,857 lehrt, dass die bei der Synthese von Glycidsäureamid verbleibenden Peroxide mit Palladium auf Kohle zerstört werden.
In der EP-A 0 025 608 wird beschrieben, dass Peroxide wie Na-Perborat oder H₂O₂ durch Schwermetalle enthaltende Materialien, wie Zeolithe oder Bentonite, die Cu, Mn, Ni, V oder Fe enthalten, zersetzt werden können.
EP-A 0 215 588 beschreibt die Entfernung von restlichen Peroxiden des t-Butanols mit Ni-, Pt- und/oder Pd-Katalysatoren.
US 4,551,553 beschreibt die Zerstörung von Hydroperoxiden mit homogenen Cr/Ru-Katalysatoren.
US 3,306,846 empfiehlt die Peroxidentfernung in Benzinen mit Hilfe von PbO₂ oder MnO₂.
DE-A 43 33 328 beschreibt ein katalytisches Verfahren zur kontrollierten Zersetzung von (organischen) Peroxiden. Als Katalysatoren werden Mischungen von Oxiden der Elemente Mn, Cu, Fe, Ni, Co, Ce, Mo, V und W genannt.
In *Selective decomposition of cyclohexyl hydroperoxide to cyclohexanone catalyzed by chromium aluminophosphate-5, J.D. Chen, J. Dakka, R.A. Sheldon, Applied Catalysis A: General, 108 (1994) L1-L6* wird die selektive Zerstörung von Cyclohexylhydroperoxid an Cr-substituierten Aluminophosphaten beschrieben.

Anhand der Zeichnung wird die vorliegende Erfindung nachstehend näher erläutert.

Es zeigt:

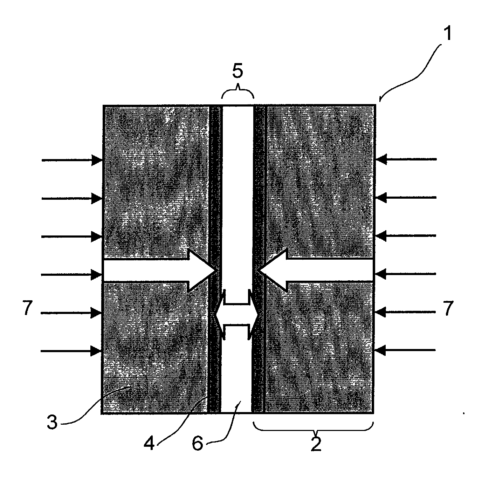

- Figur 1: eine schematische Darstellung des Aufbaus einer Brennstoffzelle gemäß dem Stand der Technik.

In Figur 1 ist eine schematische Darstellung einer Brennstoffzelle 1 nach dem heutigen Stand der Technik gezeigt. Im allgemeinen besteht eine derartige Brennstoffzelle 1 aus zwei sich gegenüberstehenden gasdurchlässigen, porösen Elektroden 2, die unter dem Begriff Gasdiffusionselektroden (GDE) bekannt sind. Sie umfassen ein poröses, elektrisch leitendes Substrat 3 und eine elektrokatalytische Schicht 4. Innerhalb des vorgesehenen Spaltes 5 zwischen den Elektroden 2 befindet sich eine Membran 6. Diese Membran beinhaltet gleichzeitig den Elektrolyten. Der Elektrolyt stellt den ionischen Stromtransport in der Brennstoffzelle sicher. Er bildet eine gasdichte Barriere zwischen den beiden Elektroden 2 und bildet somit eine elektrochemisch aktive Zone, innerhalb welcher die Elektrolyse stattfinden kann. In Polymerelektrolyt-Brennstoffzellen werden organische Ionenaustauschermembranen, beispielsweise perfluorierte Kationenaustauschermembranen eingesetzt. Der innige Kontakt zwischen der Membran 6 und den Gasdiffusionselektroden 2 wird durch aurwendige Techniken, zum Beispiel durch "Hot-Pressing" und weitere Teilschritte erreicht. Die Reaktionsgase 7 werden über Gasverteilersysteme von der Rückseite der Elektrode 2, d.h. der jeweils von der Gegenelektrode abgewandten Seite, der elektrochemisch aktiven Zone zugeführt. Somit laufen Gastransport 8 (dicke, einsinnige Pfeile) und Ionentransport 9 (dicker Doppelpfeil) insgesamt parallel. Zwei Schlüsselkomponenten, insbesondere des Polymer-Elektrolyt-Membran-(PEM)-Brennstoffzellentyps, sind somit die kostenintensive protonendurchlässige organische Ionenaustauschermembran 6, die bislang eine hohe Sensibilität gegenüber Verunreinigungen und/oder reaktiven chemischen Verbindungen aufweist, sowie die elektrokatalytische Schicht 4 der Elektroden 2, die einen hohen Gehalt an Pt (20 Gew.-%) sowie gegebenenfalls weiteren Edelmetallen, z.B. Ru aufweist.

Bei einer bevorzugten Ausführungsform der vorliegenden Erfindung ist das mindestens eine Additiv, das die Bildung von Peroxiden verhindert und/oder Peroxide zersetzt, Bestandteil der elektrokatalytischen Schicht 4. Da die einzelnen Teilelektroden vor dem Zusammenbau zur Gesamtelektrode 2 beliebig bearbeitbar sind, können sie in geeigneter Weise mit Katalysatoren versehen werden. Dies geschieht insbesondere durch Beschichtung mit elektrokatalytisch wirksamen Materialien (Standardkatalysatoren), beispielsweise mit Edelmetallen wie Platin, Palladium, Silber, Ruthenium oder Iridium oder Kombinationen daraus und mit deperoxidationsaktiven Verbindungen und/oder Elementen.

Dies kann insbesondere durch galvanische Beschichtungen und/oder stromlose Metallabscheidungen und/oder Fäll- und/oder Tränktechniken etc, wie sie im Stand der Technik beschrieben sind, erfolgen.

Die elektrokatalytische Schicht 4 enthält demnach mindestens einen Standardkatalysator. Bei der bevorzugten Ausführungsform der vorliegenden Erfindung, bei der das mindestens eine Additiv Bestandteil der mindestens einen Standardkatalysator enthaltenden elektrokatalytischen Schicht 4 ist, liegt das mindestens eine Additiv bezogen auf den mindestens einen Standardkatalysator bevorzugt in einem Massenverhältnis von 1:10 bis 1:0,5, besonders bevorzugt in einem Massenverhältnis von 1:5 bis 1:1 vor.

Bei einer weiteren bevorzugten Ausführungsform der vorliegenden Erfindung liegen das mindestens eine Additiv als Beschichtung der Elektroden 2 vor. In einer anderen bevorzugten Ausführungsform der vorliegenden Erfindung ist das mindestens eine Additiv jeweils in den gesamten Elektroden 2 verteilt.

Vorzugsweise umfasst das mindestens eine Additiv zur Verhinderung der Bildung oder Zersetzung von Peroxiden mindestens ein Element oder mindestens eine Verbindung aus den Gruppen der metallischen Übergangselemente des Periodensystems der Elemente, also aus den Gruppen IIIb, IVb, Vb, VIb, VIIb, VIIIb, Ib und IIb oder mindestens ein metallisches Element oder mindestens eine Verbindung aus der 4. Hauptgruppe (IVa) des Periodensystems der Elemente. Das mindestens eine Additiv enthält insbesondere mindestens eines der Elemente Co, Fe, Cr, Mn, Cu, V, Ru, Pd, Ni, Mo, Sn oder W. Diese Elemente weisen die notwendigen deperoxidationsaktiven Eigenschaften auf.

In einer bevorzugten Ausführungsform der vorliegenden Erfindung liegen die in dem mindestens einen Additiv enthaltenen Elemente in elementarer Form und/oder in Form von Salzen vor. Die Elemente können diskret oder als Legierungsbestandteile in oder an den Elektroden vorliegen. Ferner können die in dem mindestens einen Additiv enthaltenen Elemente in Form von Oxiden und/oder metallorganischen Komplexen vorliegen. Denkbar sind auch Kombinationen aller genannten Formen der in dem mindestens einen Additiv enthaltenen Elemente. Vorzugsweise liegen die in dem mindestens einen Additiv enthaltenden Elemente und/oder Verbindungen in heterogenisierter Form in Verbindung mit mindestens einer Trägersubstanz vor. Es wird bevorzugt eine Trägersubstanz aus der Gruppe C, SiO₂, Al₂O₃, Zeolithe und Heteropolysäuren gewählt.

Die in der vorliegenden Erfindung zur Verwendung kommenden Ionenaustauschermaterialien können zum Beispiel folgende Polymermaterialien oder Mischungen daraus enthalten:
Per- und/oder teilfluorierte Polymere wie Nafion® (Dupont; USA), "Dow Experimental Membrane" (Dow Chemicals, USA), Aciplex-S® (Asahi Chemicals; Japan); Raymion® (Chlorine Engineering Corp.; Japan); "Raipore R-1010" (Pall Rai Manufacturing Co.; USA).
Bevorzugt sind jedoch solche Polymermaterialien, die keine fluorierten Bestandteile enthalten, z.B. sulfonierte Phenol-formaldehyd Harze (linear oder verknüpft); sulfoniertes Polystyrol (linear oder verknüpft); sulfonierte Poly-2,6-diphenyl-1,4-phenylenoxide; sulfonierte Polyarylethersulfone; sulfonierte Polyarylenethersulfone; sulfonierte Polyaryletherketone; phophonierte Poly-2,6-dimethyl-1,4-phenylenoxide.
Besonders bevorzugt solche Polymermaterialien, die folgende Bestandteile (oder Mischungen daraus) enthalten: Polybenzimidazol-Phosphorsäure; sulfonierte Polyphenylene; sulfoniertes Polyphenylensulfid; polymere Sulfonsäuren des Typs Polymer-SO₃X (X= NH₄⁺, NH₃R⁺, NH₂R₂⁺, NHR₃⁺, NR₄⁺).
Zusätzlich zu den oben aufgeführten Polymermaterialien können die zur Verwendung kommenden Ionenaustauschermaterialien weitere anorganische und/oder organische Bestandteile (z.B. Silikate, Mineralien, Tone, Silikone) enthalten, die die Eigenschaften des Ionenaustauschermaterials (z.B. Leitfähigkeit) positiv beeinflussen.

### Versuchsbeispiele

Für die nachfolgend aufgeführten Beispiele wurden erfindungsgemäße Brennstoffzellen mit deperoxidationsaktive Additive enthaltenden Elektrokatalysatoren sowie mit Vergleichskatalysatoren (Standardkatalysatoren) hergestellt und verwendet. Die Katalysatoren mit Additiven, die die Bildung von reaktiven Peroxiden unter Brennstoffzellenbedingungen unterdrücken, und die Vergleichskatalysatoren (Standardkatalysatoren) aus dem Stand der Technik werden im folgenden bezüglich ihrer (elektro)chemischen Eigenschaften in der Anwendung für Brennstoffzellen miteinander verglichen. Als Trägermaterial für die Elektrokatalysatoren in den erfindungsgemäßen Brennstoffzellen wurde der Furnace-Ruß XC-72 des Herstellers Cabot Inc.(Boston, Massachusetts) verwendet. Die Partikelgrößenbestimmung der Metallkristallite der Elektrokatalysatoren wurde mittels Röntgenbeugung vorgenommen.

### Beispiel 1

Es wurden 3,93 g Cu(II)-Acetat, 14,97 g Äthylendiamintetraessigsäure, z.B. Titriplex® II und 10 ml wässrige Ammoniaklösung (25 Gew.-%-ig) mit voll entsalztem H₂O auf 200 ml Gesamtlösung aufgefüllt. Dazu wurde eine Suspension von 10 g Vulcan XC-72 Furnace Ruß des Herstellers Cabot Inc.(Boston, Massachusetts) in 50 ml voll entsalztem H₂O sowie 0,1 ml Pyridin und 2,9 ml wässrigem Formaldehyd (37 Gew.-%-ig) hinzugegeben. Mit wässriger Natronlauge (40 Gew.%-ig) wurde ein pH-Wert von 12 eingestellt. Die Reaktionsmischung wurde 1h auf 70 °C erwärmt. Anschließend wurde der Katalysator über eine Glasfritte abgesaugt, 4h bei 80 °C getrocknet und 2 h bei 200 °C calciniert.
Zur Pt-Abscheidung wurden in einer 500 ml-Rührapparatur 4,94 g wässrige Hexachloroplatinsäurelösung (25 Gew.-%-ig) und 150 ml voll entsalztes H₂O vorgelegt, der Cuhaltige Ruß hinzugegeben und für 2 h bei 85 °C gerührt. Danach wurde mit HCl-Lösung (10 Gew.-%-ig) pH 2,75 eingestellt. Nach Zugabe von 3,40 g wässriger Na-Acetatlösung (25 Gew.-%-ig) und 8 ml konz. Ameisensäure wurde 24 h gerührt, der Katalysator über eine Glasfritte abgesaugt und mit 1000 ml voll entsalztem H₂O neutral gewaschen und 4 h bei 80 °C getrocknet. Der erhaltene Elektrokatalysator weist einen Platin- und einen Kupfergehalt von jeweils 10 Gew.-% auf. Die Röntgenanalyse an diesem Material belegt klar das Vorliegen eines legierten Pt/Cu-Systems (Pt/Cu-Kristallitgröße: 3,0 nm); Beugungsreflexe der reinen Metalle sind dabei nicht vorhanden.

### Beispiel 2

In Analogie zu Beispiel 1 wurde ein Elektrokatalysator hergestellt, der 20 Gew.-% Platin und 5 Gew.-% Kupfer enthält. Die Pt/Cu-Kristallitgröße beträgt 3,5 nm.

### Beispiel 3

In Analogie zu Beispiel 1 wurde ein Elektrokatalysator hergestellt, der 10 Gew.-% Platin und 5 Gew.-% Kupfer enthält. Die Pt/Cu-Kristallitgröße beträgt 3,1 nm.

### Beispiel 4

In Analogie zu Beispiel 1 wurde ein Elektrokatalysator hergestellt, der 20 Gew.-% Platin und 5 Gew.-% Zinn enthält. Die Pt/Cu-Kristallitgröße liegt bei 4 nm.

### Beispiel 5

5,58 g Manganacetat wurden in 50 ml voll entsalztem H₂O gelöst. Anschließend wurden 10 g Vulcan XC-72 Furnace Ruß entsprechend der Wasseraufnahme mit dieser Lösung getränkt. Nach 2 h Standzeit wurde das Material über eine Glasfritte abgesaugt, 4 h bei 80 °C getrocknet und 2 h bei 250 °C calciniert. Anschließend wurde, wie unter Beispiel 1 beschrieben, Platin auf dieses Material abgeschieden. Man erhielt einen Elektrokatalysator, der 10 Gew.-% Platin und 10 Gew.-% Mangan enthält. Die Platinkristallitgröße liegt bei 4,8 nm.

### Vergleichsbeispiel V1

Für Vergleichsversuche wurde ein kommerziell erhältlicher Pt-Trägerkatalysator (des Herstellers E-TEK Div. Of De Nora Inc., Sommerset, NJ) (Pt-Gehalt: 20 Gew.-%) herangezogen. Er repräsentiert den Stand der Technik auf diesem Gebiet.

### Vergleichsbeispiel V2

Die Synthese des Katalysators erfolgte in Analogie zu dem in EP-A 1 079 452 in Vergleichsbeispiel 1 beschriebenen Katalysator unter Verwendung von Vulcan XC-72 Furnace Ruß. Die Kristallitgröße der Pt-Kristallite beträgt 3,8 nm.

### Ergebnisse zu den Beispielen 1 bis 5 und den Vergleichsbeispielen V1 und V2

Die Elektrolytkatalysatoren wurden für die elektrochemische Charakterisierung zu einer Membran-Elektroden-Einheit verarbeitet. Die Kathoden- und Anoden-Katalysatoren wurden gemäß des in US 5,861,222 beschriebenen Verfahrens (dortiges Vergleichsbeispiel 1) auf eine ionenleitfähige Membran (Neosepta CMX, Hersteller: Tokuyama Europe GmbH, Düsseldorf, Basis sulfoniertes Polystyrol) aufgebracht. Die so beschichtete Membran wird zwischen zwei leitfähige hydrophobierte Kohlepapiere (Hersteller: Toray Industries Inc., Tokio) gelegt. Die Belegung der Kathoden- und Anodenseite beträgt jeweils 0,25 mg Platin/cm². Die so erhaltenen Membran-Elektroden-Einheiten wurden in einer PEM-Einzelzelle (Druckloser Betrieb, Temperatur 80°C) vermessen, wobei eine Zellspannung von 700 mV eingestellt wurde.

In der folgenden Tabelle ist die Zell-Leistung nach 100 und nach 1500 Betriebsstunden für die jeweils verwendeten Katalysatoren aufgeführt:

| Katalysator | Zell-Leistung bei 700 mV [mA/cm2] nach 100 Betriebsstunden | Zell-Leistung bei 700 mV [mA/cm2] nach 1500 Betriebsstunden |
|---|---|---|
| Beispiel 1 | 230 | 232 |
| Beispiel 2 | 256 | 253 |
| Beispiel 3 | 244 | 241 |
| Beispiel 4 | 260 | 261 |
| Beispiel 5 | 244 | 245 |
| Vergleichsbeispiel V1 | 240 | 183 |
| Vergleichsbeispiel V2 | 245 | 175 |

Bei 700 mV und in der Zeit zwischen 100 und 1500 Betriebsstunden lässt die Zell-Leistung bei Brennstoffzellen gemäß dem Stand der Technik (Vergleichsbeispiele) nach. In Vergleichsbeispiel 1 nimmt sie um 24% und in Vergleichsbeispiel 2 um 28% ab. Die erfindungsgemäßen Brennstoffzellen (Beispiele 1 bis 5) zeigen jedoch keine Degradationseffekte. Die Zell-Leistung bei den erfindungsgemäßen Brennstoffzellen bleibt im Rahmen der Messfehler in der Zeit zwischen 100 und 1500 Betriebstunden unverändert. Durch die vorliegende Erfindung werden die Wirtschaftlichkeit, der Wirkungsgrad und Lebensdauer der erfindungsgemäßen Brennstoffzellen gegenüber den bisher bekannten Brennstoffzellen erheblich verbessert.

### Bezugszeichenliste

- 1: Brennstoffzelle
- 2: Elektroden
- 3: Substrat
- 4: elektrokatalytische Schichten
- 5: Spalt
- 6: Membran
- 7: Reaktionsgase
- 8: Gastransport
- 9: Ionentransport

## Patentansprüche

1. Brennstoffzelle (1) mit zwei Elektroden (2) und einer Ionenaustauschermembran (6), wobei die Elektroden (2) mit jeweils einer elektrokatalytischen Schicht (4) und mit jeweils mindestens einer Gasführung für ein Reaktionsgas (7) versehen sind und die jeweilige elektrokatalytische Schicht (4) mindestens einen Standardkatalysator enthält, **dadurch gekennzeichnet, daß** die Brennstoffzelle mindestens ein Additiv aufweist, das die Bildung von Peroxiden verhindert und/oder Peroxide zersetzt.

2. Brennstoffzelle gemäß Anspruch 1, **dadurch gekennzeichnet, daß** das mindestens eine Additiv mindestens ein Element oder mindestens eine Verbindung aus den Gruppen der metallischen Übergangselemente oder aus der 4. Hauptgruppe des Periodensystems der Elemente umfasst.

3. Brennstoffzelle gemäß Anspruch 1, **dadurch gekennzeichnet, daß** das mindestens eine Additiv mindestens eines der Elemente Co, Fe, Cr, Mn, Cu, V, Ru, Pd, Ni, Mo, Sn oder W enthält.

4. Brennstoffzelle gemäß Anspruch 2 oder 3, **dadurch gekennzeichnet, daß** die in dem mindestens einen Additiv enthaltenen Elemente in elementarer Form oder in Form von Salzen, Oxiden oder metallorganischen Komplexen oder Kombinationen daraus vorliegen.

5. Brennstoffzelle gemäß einem der Ansprüche 2 bis 4, **dadurch gekennzeichnet, daß** die enthaltenen Elemente und/oder Verbindungen in heterogenisierter Form in Verbindung mit mindestens einer Trägersubstanz vorliegen.

6. Brennstoffzelle gemäß Anspruch 5, **dadurch gekennzeichnet, daß** eine Trägersubstanz aus der Gruppe C, SiO₂, Al₂O₃, Zeolithe und Heteropolysäuren gewählt wird.

7. Brennstoffzelle gemäß einem der Ansprüche 1 bis 6, **dadurch gekennzeichnet, daß** das mindestens eine Additiv Bestandteil der elektrokatalytischen Schicht (4) ist.

8. Brennstoffzelle gemäß einem der Ansprüche 1 bis 6, **dadurch gekennzeichnet, daß** das mindestens eine Additiv als Beschichtung der Elektroden (2) vorliegt und/oder jeweils in den ganzen Elektroden (2) verteilt ist.

9. Verwendung von mindestens einem Additiv in oder an Elektroden (2) einer Brennstoffzelle (1) mit einer Ionenaustauschermembran (6), wobei die Elektroden (2) mit jeweils einer elektrokatalytischen Schicht (4) und mit jeweils mindestens einer Gasführung für ein Reaktionsgas (7) versehen sind und das mindestens eine Additiv zur Verhinderung der Bildung und/oder Zersetzung von Peroxiden an oder in den Elektroden (2) dient.
